# EUROPEAN PATENT APPLICATION

(11) **EP 3 599 295 A1**
(43) Date of publication of application: **29.01.2020**
(21) Application number: 19186218.4
(22) Date of filing: 15.07.2019
(51) Int. Cl.: C25D 5/38, C23F 1/26, C25F 1/08, C25F 3/08

(54) **COMPOSITIONS AND METHODS FOR ACTIVATING TITANIUM SUBSTRATES**

(30) Priority: 25.07.2018 US 201816045389
(71) Applicant: The Boeing Company, Chicago, IL 60606-1596 (US)
(72) Inventor: SUBRAMANIARAJA, Sakurjayaram R., Huntington Beach, CA California 92647 (US)
(74) Representative: Harris, Jennifer Lucy

(57) **Abstract**

A method for pretreating a substrate prior to depositing a material thereon, the method including immersing the substrate in an activation solution for a predetermined period of time, the activation solution including a fluoride salt, hydrofluoric acid, sulfuric acid and water.

## Description

### FIELD

This application relates to material deposition onto substrates and, more particularly, to compositions and methods for activating metallic substrates and compositions and methods for electrodepositing tin-bismuth alloys onto metallic substrates.

### BACKGROUND

Mechanical fasteners are widely used for joining two or more components of a structural assembly. For example, mechanical fasteners are extensively used for joining the structural components of the airframe of an aircraft.

Aircraft experience electromagnetic effects (EME) from a variety of sources, such as lightning strikes and precipitation static. Metallic aircraft structures are readily conductive and, therefore, are relatively less susceptible to electromagnetic effects. However, composite (e.g., carbon fiber reinforced plastic) aircraft structures do not readily conduct away the significant electrical currents and electromagnetic forces stemming from electromagnetic effects. Therefore, when mechanical fasteners are used in composite aircraft structures, steps must be taken to protect against electromagnetic effects.

Electromagnetic effects protection can be provided to mechanical fasteners in the form of an electrically conductive metallic surface deposit, such as metallic plating. While various metallic surface deposits may provide suitable electrical conductivity for imparting electromagnetic effects protection, other factors, such as lubricity and galvanic compatibility with carbon fiber-reinforced plastics, are also considerations for mechanical fasteners intended for the aerospace industry.

Tin exists in alpha and beta phases. Alpha tin is grey in color, powdery and forms pest, while beta tin is white and possesses body centered tetragonal crystal structure. When tin is alloyed with bismuth at concentrations greater than 0.4 percent by weight bismuth, it begins to exist as beta phase. Tin-bismuth has shown promise as a suitable metallic surface deposit for mechanical fasteners due to its electrical conductivity, lubricity and galvanic compatibility with carbon fiber-reinforced plastics.

Accordingly, those skilled in the art continue with research and development efforts in the field of electrodeposition.

### SUMMARY

An activation solution including water, a fluoride salt, hydrofluoric acid, and sulfuric acid.

An activation solution including water, at least one of potassium fluoride, lithium fluoride, sodium fluoride, rubidium fluoride, barium fluoride and strontium fluoride dissolved in the water, hydrofluoric acid dissolved in the water, and sulfuric acid dissolved in the water.

An activation solution including water, at least one of potassium fluoride, lithium fluoride, sodium fluoride, rubidium fluoride, barium fluoride and strontium fluoride dissolved in the water at a concentration ranging from about 5 grams per liter to about 120 grams per liter, based on a total volume of the activation solution, hydrofluoric acid dissolved in the water at a concentration ranging from about 5 milliliters per liter to about 250 milliliters per liter, based on a total volume of the activation solution, and sulfuric acid dissolved in the water at a concentration ranging from about 1 percent by volume to about 45 percent by volume, based on a total volume of the activation solution.

A method for manufacturing an activation solution includes steps of (1) mixing sulfuric acid with water to yield a first acidic solution, (2) mixing hydrofluoric acid with the first acidic solution to yield a second acidic solution, and (3) dissolving a fluoride salt in the second acidic solution.

A method for pretreating a substrate prior to depositing a material thereon, the method including the step of immersing the substrate in an activation solution for a predetermined period of time, the activation solution including water, a fluoride salt dissolved in the water, hydrofluoric acid dissolved in the water, and sulfuric acid dissolved in the water.

Other aspects of the disclosed compositions and methods for activating metallic substrates will become apparent from the following detailed description, the accompanying drawings and the appended claims.

### BRIEF DESCRIPTION OF THE DRAWINGS

Fig. 1 is a flow diagram depicting a disclosed method for depositing a material onto a substrate;
Fig. 2 is micrograph of a tin-bismuth alloy deposited on a titanium substrate in accordance with the method of Fig. 1;
Fig. 3 is a flow diagram depicting one disclosed method for activating a substrate, such as a titanium substrate, in accordance with the method of Fig. 1;
Fig. 4 is a schematic illustration of a system for activating a substrate in accordance with the method of Fig. 3;
Fig. 5 is a flow diagram depicting another disclosed method for activating a substrate, such as a titanium substrate, in accordance with the method of Fig. 1;
Fig. 6 is a schematic illustration of a system for activating a substrate in accordance with the method of Fig. 5;
Fig. 7 is a flow diagram depicting yet another disclosed method for activating a substrate, such as a titanium substrate, in accordance with the method of Fig. 1;
Fig. 8 is a schematic illustration of a system for activating a substrate in accordance with the method of Fig. 7;
Fig. 9 is a schematic illustration of a system for strike plating a substrate in accordance with the method of Fig. 1;
Fig. 10 is a flow diagram depicting one disclosed method for electrodepositing a tin-bismuth alloy onto a substrate in accordance with the method of Fig. 1;
Fig. 11 is a schematic illustration of an electrodeposition system for depositing a tin-bismuth alloy in accordance with the method of Fig. 10;
Fig. 12 is a flow diagram of an aircraft manufacturing and service methodology; and
Fig. 13 is a block diagram of an aircraft.

### DETAILED DESCRIPTION

Disclosed are compositions, systems and methods for activating a metallic substrate, such as a metallic fastener or other part/component. Also disclosed are compositions, systems and methods for depositing a material onto a metallic substrate, such as a metallic fastener or other part/component. The disclosed compositions, systems and methods may be used separately or in various combinations to achieve the desired material deposit on a substrate.

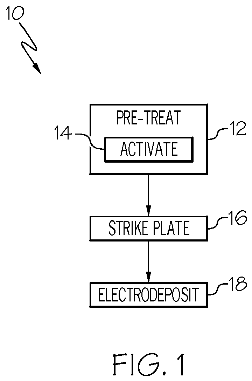

Referring to Fig. 1, disclosed is a method, generally designated 10, for depositing a material onto a substrate. While only three general steps are shown, those skilled in the art will appreciate that various additional steps may be performed-whether before, after or between the presented steps-without resulting in a departure from the scope of the present disclosure.

The initial step (Block 12) of method 10 includes pre-treating the substrate to render the substrate suitable for receiving thereon a material, such as a metallic deposit or other metallic/non-metallic material. Various pre-treatments may be performed, such as cleaning, degreasing, etching and the like. In particular, the pre-treating step (Block 12) may include activating (Block 14) the surface of the substrate. For example, in the case of titanium substrates, the step of activating (Block 14) the surface of the substrate may remove (or at least substantially reduce) the tenacious oxide layer that is known to form thereon.

The intermediate step (Block 16) of method 10 includes strike plating the pre-treated substrate. The step of strike plating (Block 16) the surface of the substrate may form a thin metallic layer on the surface of the substrate, thereby providing the substrate with a surface more suitable for receiving and bonding with a subsequent metallic deposit. In a particular implementation, the strike plating step (Block 16) may form a thin layer of nickel on the surface of the substrate.

The final step (Block 18) of method 10 includes electrodeposition onto the strike-plated substrate. The electrodeposition step (Block 18) may form a metallic deposit on the surface of the substrate. In a particular implementation, the electrodeposition step (Block 18) may deposit a tin-bismuth alloy on the surface of the substrate.

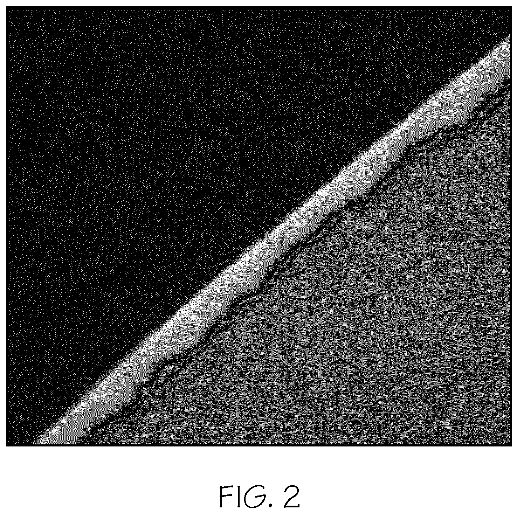

Referring to Fig. 2, the disclosed method 10 was used to deposit a thin layer of a tin-bismuth alloy onto the surface of a titanium alloy (Ti-6Al-4V) substrate. The result was an excellent bond between the tin-bismuth alloy deposit and the underlying titanium alloy substrate.

While the present disclosure primarily focuses on titanium substrates-substrates formed from titanium or titanium alloys, such as Ti-6Al-4V, it is believed that the disclosed method 10, as well as individual steps of the disclosed method 10 (e.g., the activating step (Block 14), the strike plating step (Block 16) and/or the electrodeposition step (Block 18)) may be suitable for non-titanium substrates. Examples of non-titanium substrates that may benefit from the present disclosure include, without limitation, iron alloys, copper alloys and nickel alloys (e.g., Inconel).

### ACTIVATION

Disclosed are three activation methods, including associated compositions and systems. A metallic substrate, such as a titanium substrate, may be activated using just one of the disclosed activation methods. Alternatively, a metallic substrate, such as a titanium substrate, may be activated using multiple activation methods (e.g., a sequence of activation methods), including one or more of the disclosed activation methods.

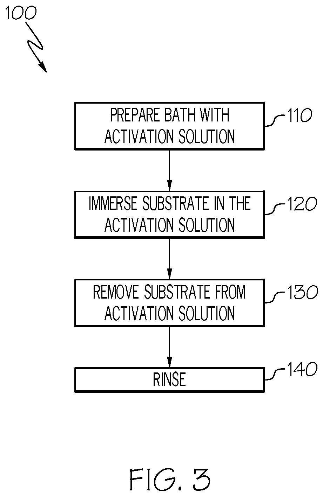

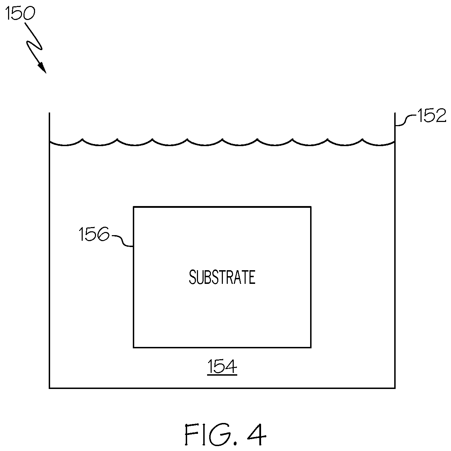

Referring to Figs. 3 and 4, a first activation method, generally designated 100, may begin at Block 110 (Fig. 3) with the step of preparing a bath 152 containing an activation solution 154, as shown in Fig. 4. The bath 152 and the activation solution 154 may comprise the first activation system 150.

The bath 152 may be any vessel suitable for receiving and containing the activation solution 154. Compositionally, the material forming the bath 152 should be chemically compatible with the activation solution 154. Of course, the bath 152 should be sized and shaped to be able to receive therein the substrate 156 to be activated by the first activation system 150.

The activation solution 154 includes water (H₂O), an ammonium salt dissolved in the water, and sulfuric acid (H₂SO₄) dissolved in the water. The activation solution 154 may be maintained at atmospheric pressure (e.g., 1 atm) and at a temperature between about 15 °C and about 50 °C (e.g., room temperature (∼21 °C)). However, using higher and lower pressures, and higher and lower temperatures is contemplated, and will not result in a departure from the scope of the present disclosure.

The ammonium salt in the activation solution 154 may have a fluorine-containing anion. In one formulation, the ammonium salt in the activation solution 154 is ammonium bifluoride (NH₄HF₂). In another formulation, the ammonium salt in the activation solution 154 is ammonium tetrafluoroborate (NH₄BF₄). In yet another formulation, the ammonium salt in the activation solution 154 includes both ammonium bifluoride (NH₄HF₂) and ammonium tetrafluoroborate (NH₄BF₄).

The ammonium salt in the activation solution 154 may be present at a concentration ranging from about 10 grams per liter to about 150 grams per liter, based on the total volume of the activation solution 154. In one alternative expression, the ammonium salt concentration ranges from about 20 grams per liter to about 120 grams per liter, based on the total volume of the activation solution 154. In another alternative expression, the ammonium salt concentration ranges from about 30 grams per liter to about 110 grams per liter, based on the total volume of the activation solution 154. In another alternative expression, the ammonium salt concentration ranges from about 40 grams per liter to about 100 grams per liter, based on the total volume of the activation solution 154. In another alternative expression, the ammonium salt concentration ranges from about 50 grams per liter to about 100 grams per liter, based on the total volume of the activation solution 154. In another alternative expression, the ammonium salt concentration ranges from about 60 grams per liter to about 100 grams per liter, based on the total volume of the activation solution 154. In another alternative expression, the ammonium salt concentration ranges from about 70 grams per liter to about 90 grams per liter, based on the total volume of the activation solution 154. In yet alternative expression, the ammonium salt concentration is about 80 grams per liter, based on the total volume of the activation solution 154.

The sulfuric acid in the activation solution 154 may be present at a concentration ranging from about 1 percent by volume to about 70 percent by volume, based on the total volume of the activation solution 154. In one alternative expression, the sulfuric acid concentration ranges from about 2 percent by volume to about 50 percent by volume, based on the total volume of the activation solution 154. In another alternative expression, the sulfuric acid concentration ranges from about 3 percent by volume to about 40 percent by volume, based on the total volume of the activation solution 154. In another alternative expression, the sulfuric acid concentration ranges from about 4 percent by volume to about 30 percent by volume, based on the total volume of the activation solution 154. In another alternative expression, the sulfuric acid concentration ranges from about 5 percent by volume to about 25 percent by volume, based on the total volume of the activation solution 154. In another alternative expression, the sulfuric acid concentration ranges from about 5 percent by volume to about 15 percent by volume, based on the total volume of the activation solution 154. In yet another alternative expression, the sulfuric acid concentration is about 10 percent by volume, based on the total volume of the activation solution 154.

As one specific, non-limiting example, the activation solution 154 includes water, 80 grams per liter ammonium bifluoride (NH₄HF₂), and 10 percent by volume sulfuric acid (H₂SO₄).

The activation solution 154 may be manufactured in various ways without departing from the scope of the present disclosure. In one particular implementation, the disclosed method for manufacturing the activation solution 154 includes steps of (1) mixing sulfuric acid (e.g., 66 degree Baume sulfuric acid) with water (e.g., deionized water) to yield an acidic solution, (2) dissolving an ammonium salt (e.g., ammonium bifluoride and/or ammonium tetrafluoroborate) in the acidic solution; and (3) adding additional water, if needed, to make up the required total volume of the activation solution 154.

At Block 120 (Fig. 3), the substrate 156 is immersed (e.g., completely immersed) in the activation solution 154. The substrate 156 may remain immersed in the activation solution 154 for a predetermined period of time prior to removing the substrate 156 from the activation solution 154, as shown in Block 130 (Fig. 3). In the case of titanium substrates (substrate 156), the predetermined period of time may be selected such that the activation solution 154 has sufficient time to reduce/eliminate the tenacious oxide layer on the substrate 156 without significantly disturbing the titanium/titanium alloy underlying the oxide layer. In one expression, the predetermined period of time is about 5 seconds to about 120 seconds. In another expression, the predetermined period of time is about 10 seconds to about 100 seconds. In another expression, the predetermined period of time is about 20 seconds to about 40 seconds. In yet another expression, the predetermined period of time is about 30 seconds.

At Block 140 (Fig. 3), the substrate 156 removed from the activation solution 154 may be rinsed with a rinsing fluid. As an example, the rinsing fluid may be water, such as deionized water.

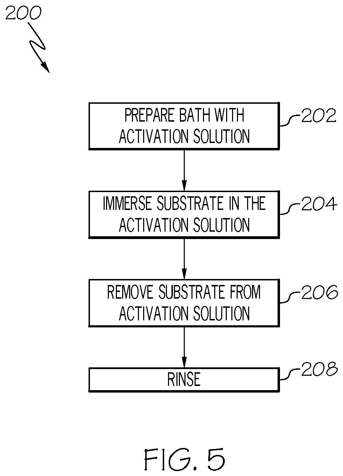

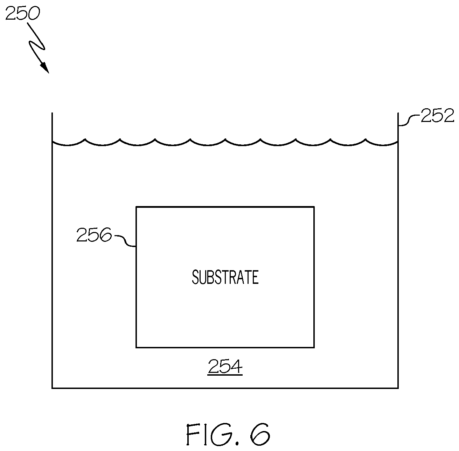

Referring to Figs. 5 and 6, a second activation method, generally designated 200, may begin at Block 202 (Fig. 5) with the step of preparing a bath 252 containing an activation solution 254, as shown in Fig. 6. The bath 252 and the activation solution 254 may comprise the second activation system 250.

The bath 252 may be any vessel suitable for receiving and containing the activation solution 254. Compositionally, the material forming the bath 252 should be chemically compatible with the activation solution 254. Of course, the bath 252 should be sized and shaped to be able to receive therein the substrate 256 to be activated by the second activation system 250.

The activation solution 254 includes water (H₂O), a fluoride salt dissolved in the water, hydrofluoric acid (HF) dissolved in the water, and sulfuric acid (H₂SO₄) dissolved in the water. The activation solution 254 may be maintained at atmospheric pressure (e.g., 1 atm) and at a temperature between about 15 °C and about 50 °C (e.g., room temperature (∼21 °C)). However, using higher and lower pressures, and higher and lower temperatures is contemplated, and will not result in a departure from the scope of the present disclosure.

The fluoride salt in the activation solution 254 may have an alkali metal cation and/or an alkaline earth metal cation. In one formulation, the fluoride salt in the activation solution 254 is potassium fluoride (KF). In another formulation, the fluoride salt in the activation solution 254 is lithium fluoride (LiF). In another formulation, the fluoride salt in the activation solution 254 is sodium fluoride (NaF). In another formulation, the fluoride salt in the activation solution 254 is rubidium fluoride (RuF). In another formulation, the fluoride salt in the activation solution 254 is barium fluoride (BaF₂). In another formulation, the fluoride salt in the activation solution 254 is strontium fluoride (SrF₂). In yet another formulation, the fluoride salt in the activation solution 254 includes at least two of potassium fluoride (KF), lithium fluoride (LiF), sodium fluoride (NaF), rubidium fluoride (RuF), barium fluoride (BaF₂), and strontium fluoride (SrF₂).

The fluoride salt in the activation solution 254 may be present at a concentration ranging from about 5 grams per liter to about 120 grams per liter, based on the total volume of the activation solution 254. In one alternative expression, the fluoride salt concentration ranges from about 10 grams per liter to about 100 grams per liter, based on the total volume of the activation solution 254. In another alternative expression, the fluoride salt concentration ranges from about 15 grams per liter to about 75 grams per liter, based on the total volume of the activation solution 254. In another alternative expression, the fluoride salt concentration ranges from about 15 grams per liter to about 50 grams per liter, based on the total volume of the activation solution 254. In another alternative expression, the fluoride salt concentration ranges from about 15 grams per liter to about 30 grams per liter, based on the total volume of the activation solution 254. In yet alternative expression, the fluoride salt concentration is about 20 grams per liter, based on the total volume of the activation solution 254.

The hydrofluoric acid in the activation solution 254 may be present at a concentration ranging from about 5 milliliters per liter to about 250 milliliters per liter, based on the total volume of the activation solution 254. In one alternative expression, the hydrofluoric acid concentration ranges from about 10 milliliters per liter to about 200 milliliters per liter, based on the total volume of the activation solution 254. In another alternative expression, the hydrofluoric acid concentration ranges from about 15 milliliters per liter to about 150 milliliters per liter, based on the total volume of the activation solution 254. In another alternative expression, the hydrofluoric acid concentration ranges from about 20 milliliters per liter to about 150 milliliters per liter, based on the total volume of the activation solution 254. In another alternative expression, the hydrofluoric acid concentration ranges from about 30 milliliters per liter to about 100 milliliters per liter, based on the total volume of the activation solution 254. In another alternative expression, the hydrofluoric acid concentration ranges from about 40 milliliters per liter to about 80 milliliters per liter, based on the total volume of the activation solution 254. In yet another alternative expression, the hydrofluoric acid concentration is about 60 milliliters per liter, based on the total volume of the activation solution 254.

The sulfuric acid in the activation solution 254 may be present at a concentration ranging from about 1 percent by volume to about 45 percent by volume, based on the total volume of the activation solution 254. In one alternative expression, the sulfuric acid concentration ranges from about 2 percent by volume to about 35 percent by volume, based on the total volume of the activation solution 254. In another alternative expression, the sulfuric acid concentration ranges from about 2 percent by volume to about 20 percent by volume, based on the total volume of the activation solution 254. In another alternative expression, the sulfuric acid concentration ranges from about 3 percent by volume to about 15 percent by volume, based on the total volume of the activation solution 254. In another alternative expression, the sulfuric acid concentration ranges from about 3 percent by volume to about 10 percent by volume, based on the total volume of the activation solution 254. In yet another alternative expression, the sulfuric acid concentration is about 5 percent by volume, based on the total volume of the activation solution 254.

As one specific, non-limiting example, the activation solution 254 includes water, 20 grams per liter potassium fluoride (KF), 60 milliliters per liter hydrofluoric acid (HF), and 5 percent by volume sulfuric acid (H₂SO₄).

The activation solution 254 may be manufactured in various ways without departing from the scope of the present disclosure. In one particular implementation, the disclosed method for manufacturing the activation solution 254 includes steps of (1) mixing sulfuric acid (e.g., 66 degree Baume sulfuric acid) with water (e.g., deionized water) to yield a first acidic solution, (2) mixing hydrofluoric acid (e.g., 48 wt% in water) with the first acidic solution to yield a second acidic solution, (3) dissolving a fluoride salt (e.g., potassium fluoride) in the second acidic solution; and (4) adding additional water, if needed, to make up the required total volume of the activation solution 254.

At Block 204 (Fig. 5), the substrate 256 is immersed (e.g., completely immersed) in the activation solution 254. The substrate 256 may remain immersed in the activation solution 254 for a predetermined period of time prior to removing the substrate 256 from the activation solution 254, as shown in Block 206 (Fig. 5). In the case of titanium substrates (substrate 256), the predetermined period of time may be selected such that the activation solution 254 has sufficient time to reduce/eliminate the tenacious oxide layer on the substrate 256 without significantly disturbing the titanium/titanium alloy underlying the oxide layer. In one expression, the predetermined period of time is about 5 seconds to about 120 seconds. In another expression, the predetermined period of time is about 10 seconds to about 100 seconds. In another expression, the predetermined period of time is about 20 seconds to about 40 seconds. In yet another expression, the predetermined period of time is about 30 seconds.

At Block 208 (Fig. 5), the substrate 256 removed from the activation solution 254 may be rinsed with a rinsing fluid. As an example, the rinsing fluid may be water, such as deionized water.

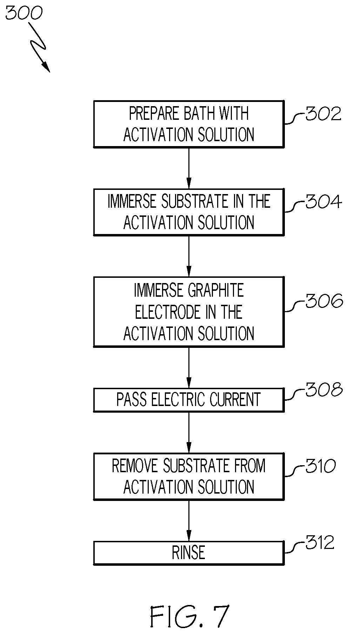

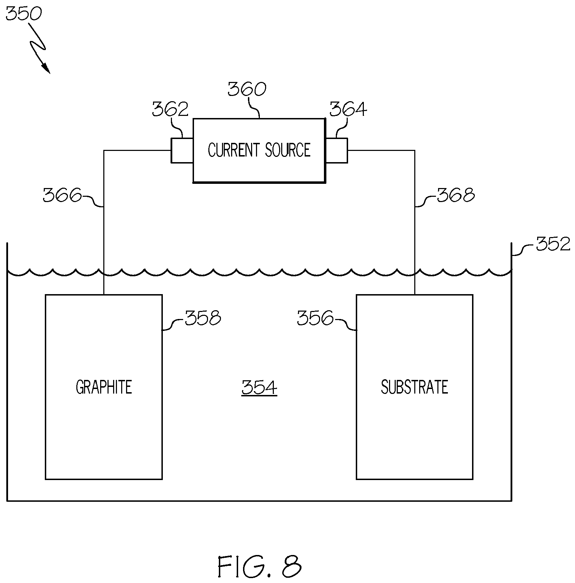

Referring to Figs. 7 and 8, a third activation method, generally designated 300, may begin at Block 302 (Fig. 7) with the step of preparing a bath 352 containing an activation solution 354, as shown in Fig. 8. The bath 352 and the activation solution 354, together with a graphite electrode 358 and current source 360, may comprise the third activation system 350, which may be used to perform an anodic sulfuric acid method (third activation method 300), as is described herein.

The bath 352 may be any vessel suitable for receiving and containing the activation solution 354. Compositionally, the material forming the bath 352 should be chemically compatible with the activation solution 354. Of course, the bath 352 should be sized and shaped to be able to receive therein the graphite anode 358 and the substrate 356 to be activated by the third activation system 350.

The activation solution 354 includes water (H₂O) and sulfuric acid (H₂SO₄) dissolved in the water. The activation solution 354 may be maintained at atmospheric pressure (e.g., 1 atm) and at a temperature between about 15 °C and about 50 °C (e.g., room temperature (∼21 °C)). However, using higher and lower pressures, and higher and lower temperatures is contemplated, and will not result in a departure from the scope of the present disclosure.

The sulfuric acid in the activation solution 354 may be present at a concentration ranging from about 5 percent by volume to about 45 percent by volume, based on the total volume of the activation solution 354. In one alternative expression, the sulfuric acid concentration ranges from about 5 percent by volume to about 35 percent by volume, based on the total volume of the activation solution 354. In another alternative expression, the sulfuric acid concentration ranges from about 5 percent by volume to about 30 percent by volume, based on the total volume of the activation solution 354. In another alternative expression, the sulfuric acid concentration ranges from about 5 percent by volume to about 25 percent by volume, based on the total volume of the activation solution 354. In another alternative expression, the sulfuric acid concentration ranges from about 10 percent by volume to about 20 percent by volume, based on the total volume of the activation solution 254. In yet another alternative expression, the sulfuric acid concentration is about 15 percent by volume, based on the total volume of the activation solution 354.

As one specific, non-limiting example, the activation solution 354 includes water and 15 percent by volume sulfuric acid (H₂SO₄).

At Block 304 (Fig. 7), the substrate 356 is immersed (e.g., completely immersed) in the activation solution 354. A lead 368 may electrically couple the immersed substrate 356 with a first terminal 364 of the current source 360.

At Block 306 (Fig. 7), the graphite electrode 358 is immersed (e.g., completely immersed) in the activation solution 354. A lead 366 may electrically couple the immersed graphite electrode 358 with a second terminal 362 of the current source 360.

At Block 308 (Fig. 7), the current source 360 is actuated such that an electric current is passed between the substrate 356 and the graphite electrode 358. The current source 360 may be configured such that the substrate 356 functions as the anode, thereby etching the substrate 356. In the case of titanium substrates (substrate 356), the anodic sulfuric acid method (third activation method 300) may reduce/eliminate the tenacious oxide layer on the substrate 356 without significantly disturbing the titanium/titanium alloy underlying the oxide layer.

The step of passing an electric current (Block 308) may be performed at various current densities without departing from the scope of the present disclosure. Those skilled in the art will appreciate that current density is a controllable parameter, and selection of an appropriate current density may require consideration of various factors, such as the duration of the passing step (Block 308), among other factors. In one expression, the electric current passed during the passing step (Block 308) may have a current density ranging from about 10 amperes per square foot to about 80 amperes per square foot, based on the surface area of the substrate 356. In another expression, the electric current passed during the passing step (Block 308) may have a current density ranging from about 20 amperes per square foot to about 60 amperes per square foot, based on the surface area of the substrate 356. In another expression, the electric current passed during the passing step (Block 308) may have a current density ranging from about 20 amperes per square foot to about 40 amperes per square foot, based on the surface area of the substrate 356. In yet another expression, the electric current passed during the passing step (Block 308) may have a current density of about 30 amperes per square foot, based on the surface area of the substrate 356.

The step of passing an electric current (Block 308) may be performed for various durations of time without departing from the scope of the present disclosure. Those skilled in the art will appreciate that the current duration is a controllable parameter, and selection of an appropriate duration of time may require consideration of various factors, such as the current density, among other factors. In one expression, the passing step (Block 308) may be performed for about 5 seconds to about 120 seconds. In another expression, the passing step (Block 308) may be performed for about 10 seconds to about 100 seconds. In another expression, the passing step (Block 308) may be performed for about 10 seconds to about 60 seconds. In another expression, the passing step (Block 308) may be performed for about 15 seconds to about 45 seconds. In yet another expression, the passing step (Block 308) may be performed for about 20 seconds to about 30 seconds.

At Block 310 (Fig. 7), the substrate 356 is disconnected from the current source 360 and removed from the activation solution 354.

At Block 312 (Fig. 7), the substrate 356 may be rinsed with a rinsing fluid. As an example, the rinsing fluid may be water, such as deionized water.

### STRIKE PLATING

Various strike plating processes, including nickel strike plating processes (e.g., Wood's nickel strike) are known in the art, and may be used in the method 10 of Fig. 1 without departing from the scope of the present disclosure. However, disclosed is a particular nickel strike plating method that yielded an excellent substrate-to-subsequent plating bond, as shown in Fig. 2.

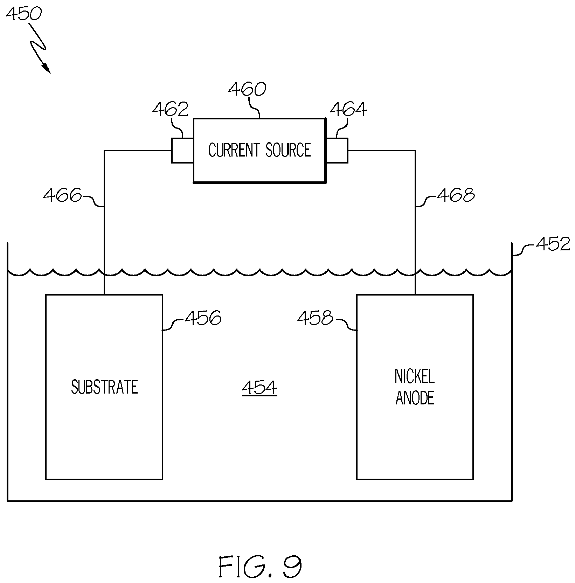

Referring to Fig. 9, a strike plating system, generally designated 450, includes a bath 452, an electrolyte solution 454 received in the bath 452, a nickel anode 458 immersed in the electrolyte solution 454, and current source 460. The current source 460 may include first terminal 462 and a second terminal 464. The nickel anode 458 may be electrically coupled with the second terminal 464 by way of a lead 468.

The bath 452 may be any vessel suitable for receiving and containing the electrolyte solution 454. Compositionally, the material forming the bath 452 should be chemically compatible with the electrolyte solution 454. Of course, the bath 452 should be sized and shaped to be able to receive therein the substrate 456 and the nickel anode 458.

The electrolyte solution 454 includes water (H₂O), nickel chloride (NiCl₂) dissolved in the water, and hydrochloric acid (HCl) dissolved in the water. The electrolyte solution 454 may be maintained at atmospheric pressure (e.g., 1 atm) and at a temperature between about 15 °C and about 50 °C (e.g., room temperature (∼21 °C)). However, using higher and lower pressures, and higher and lower temperatures is contemplated, and will not result in a departure from the scope of the present disclosure.

The nickel chloride in the electrolyte solution 454 may be present at a concentration ranging from about 50 grams per liter to about 400 grams per liter, based on the total volume of the activation solution 354. In one alternative expression, the nickel chloride concentration ranges from about 75 grams per liter to about 350 grams per liter, based on the total volume of the activation solution 354. In another alternative expression, the nickel chloride concentration ranges from about 100 grams per liter to about 300 grams per liter, based on the total volume of the activation solution 354. In another alternative expression, the nickel chloride concentration ranges from about 125 grams per liter to about 275 grams per liter, based on the total volume of the activation solution 354. In another alternative expression, the nickel chloride concentration ranges from about 150 grams per liter to about 250 grams per liter, based on the total volume of the activation solution 354. In another alternative expression, the nickel chloride concentration ranges from about 175 grams per liter to about 225 grams per liter, based on the total volume of the activation solution 354.

The hydrochloric acid in the electrolyte solution 454 may be present at a concentration ranging from about 25 milliliters per liter to about 300 milliliters per liter, based on the total volume of the electrolyte solution 454. In one alternative expression, the hydrochloric acid concentration ranges from about 50 milliliters per liter to about 250 milliliters per liter, based on the total volume of the electrolyte solution 454. In another alternative expression, the hydrochloric acid concentration ranges from about 75 milliliters per liter to about 225 milliliters per liter, based on the total volume of the electrolyte solution 454. In another alternative expression, the hydrochloric acid concentration ranges from about 100 milliliters per liter to about 200 milliliters per liter, based on the total volume of the electrolyte solution 454. In another alternative expression, the hydrochloric acid concentration ranges from about 125 milliliters per liter to about 175 milliliters per liter, based on the total volume of the electrolyte solution 454.

As one specific, non-limiting example, the electrolyte solution 454 includes water, 200 grams per liter nickel chloride (NiCl₂) and 150 milliliters per limiter hydrochloric acid (HCl).

As shown in Fig. 9, the substrate 456 is immersed (e.g., completely immersed) in the electrolyte solution 454 in the bath 452. Then, the substrate 456 is electrically coupled with the first terminal 462 of the current source 460 by way of a lead 466.

To begin strike plating, the current source 460 is actuated such that an electric current is passed between the substrate 456 and the nickel anode 458, and a deposit forms on the substrate 456. Optionally, prior to initiating a cathodic strike, an anodic strike (substrate 456 functions as the anode) may be performed to etch the substrate 456.

The anodic strike (etching) may be performed at various current densities and durations of time without departing from the scope of the present disclosure. In one expression, the anodic strike may be performed at a current density ranging from about 25 amperes per square foot to about 75 amperes per square foot, based on the surface area of the substrate 456, for a duration ranging from about 1 second to about 30 seconds. For example, the anodic strike may be performed at a current density of about 120 amperes per square foot, based on the surface area of the substrate 456, for about 10 seconds.

The cathodic strike (strike plating) may be performed at various current densities and durations of time without departing from the scope of the present disclosure. In one expression, the cathodic strike may be performed at a current density ranging from about 80 amperes per square foot to about 160 amperes per square foot, based on the surface area of the substrate 456, for a duration ranging from about 30 seconds to about 10 minutes. For example, the cathodic strike may be performed at a current density of about 120 amperes per square foot, based on the surface area of the substrate 456, for about 5 minutes.

Once the current source 460 is deactivated, the substrate 456 can be disconnected from the current source 460 and removed from the electrolyte solution 454. Then, the substrate 356 may be rinsed with a rinsing fluid, such as deionized water.

### ELECTRODEPOSITION

Various strike electrodeposition processes may be used in the method 10 of Fig. 1 without departing from the scope of the present disclosure. However, disclosed is a particular tin-bismuth electrodeposition method that yielded an excellent substrate-to-subsequent plating bond, as shown in Fig. 2, when used in sequence with one of the disclosed activation methods and the disclosed nickel strike plating method.

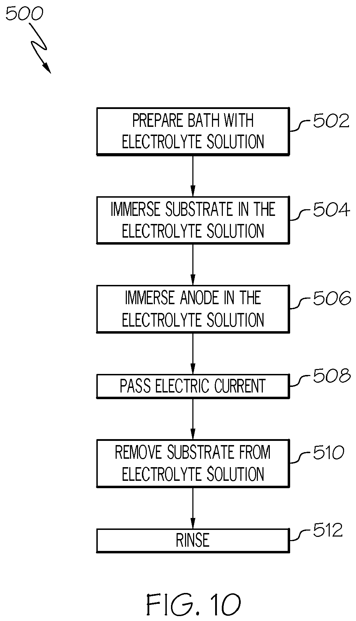

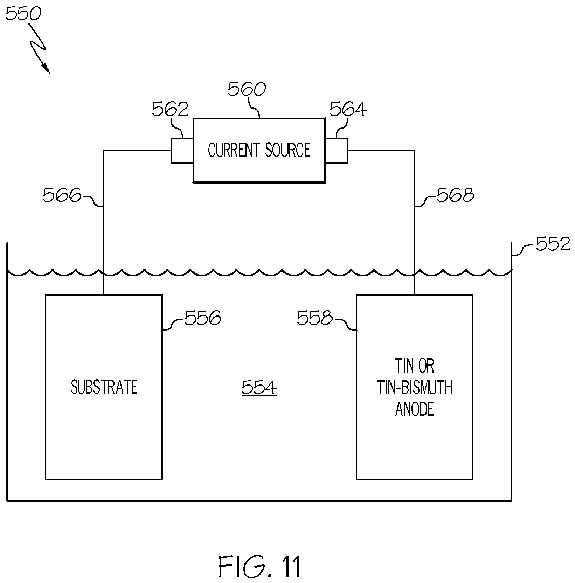

Referring to Figs. 10 and 11, the disclosed electrodeposition method, generally designated 500, may begin at Block 502 (Fig. 10) with the step of preparing a bath 552 containing an electrolyte solution 554, as shown in Fig. 11. The bath 552 and the activation solution 554, together with an anode 558 and a current source 560, may comprise the disclosed electrodeposition system 550, which may be used to deposit a tin-bismuth alloy onto a substrate 556.

The substrate 556 may be a titanium substrate, such as a titanium mechanical fastener or the like. Other metallic substrates 556, such as iron substrates, copper substrates and nickel substrates (e.g., Inconel), may also be used with the disclosed electrodeposition method 500 and system 550 without departing from the scope of the present disclosure.

The anode 558 of the disclosed electrodeposition system 550 may be a tin anode (e.g., 99.99 percent pure tin) or a tin-bismuth anode. As one general example, the anode 558 may include about 2 percent by weight to about 5 percent by weight bismuth, with the balance substantially tin. As one specific example, the anode 558 may include about 3 percent by weight bismuth, with the balance substantially tin.

The bath 552 may be any vessel suitable for receiving and containing the electrolyte solution 554. Compositionally, the material forming the bath 552 should be chemically compatible with the activation solution 554. Of course, the bath 552 should be sized and shaped to be able to receive therein the anode 558 and the substrate 556.

The electrolyte solution 554 includes water (H₂O), a stannous salt dissolved in the water, a bismuth salt dissolved in the water, and an acid. The electrolyte solution 554 may be maintained at atmospheric pressure (e.g., 1 atm) and at a temperature between about 15 °C and about 50 °C (e.g., room temperature (∼21 °C)). However, using higher and lower pressures, and higher and lower temperatures is contemplated, and will not result in a departure from the scope of the present disclosure.

The stannous salt in the electrolyte solution 554 provides stannous (tin(II)²⁺) ions. In one formulation, the stannous salt in the electrolyte solution 554 is stannous sulfate (SnSO₄). In another formulation, the stannous salt in the electrolyte solution 554 is stannous chloride (SnCl₂). In another formulation, the stannous salt in the electrolyte solution 554 is stannous fluoride (SnF₂). In yet another formulation, the stannous salt in the electrolyte solution 554 includes at least two of stannous sulfate (SnSO₄), stannous chloride (SnCl₂), and stannous fluoride (SnF₂).

The stannous salt in the electrolyte solution 554 may be present at a concentration ranging from about 15 grams per liter to about 200 grams per liter, based on the total volume of the electrolyte solution 554. In one alternative expression, the stannous salt concentration ranges from about 15 grams per liter to about 150 grams per liter, based on the total volume of the electrolyte solution 554. In another alternative expression, the stannous salt concentration ranges from about 15 grams per liter to about 100 grams per liter, based on the total volume of the electrolyte solution 554. In another alternative expression, the stannous salt concentration ranges from about 20 grams per liter to about 100 grams per liter, based on the total volume of the electrolyte solution 554. In another alternative expression, the stannous salt concentration ranges from about 20 grams per liter to about 50 grams per liter, based on the total volume of the electrolyte solution 554. In yet alternative expression, the stannous salt concentration ranges from about 25 grams per liter to about 35 grams per liter, based on the total volume of the electrolyte solution 554.

The bismuth salt in the electrolyte solution 554 provides bismuth (Bi³⁺) ions. In one formulation, the bismuth salt in the electrolyte solution 554 is bismuth sulfate (Bi₂(SO₄)₃). In another formulation, the bismuth salt in the electrolyte solution 554 is bismuth oxide (Bi₂O₃). In another formulation, the bismuth salt in the electrolyte solution 554 is bismuth nitrate (Bi(NO₃)₃). In another formulation, the bismuth salt in the electrolyte solution 554 is bismuth chloride (BiCl₃). In another formulation, the bismuth salt in the electrolyte solution 554 is bismuth trifluoride (BiF₃). In yet another formulation, the bismuth salt in the electrolyte solution 554 includes at least two of bismuth sulfate (Bi₂(SO₄)₃), bismuth oxide (Bi₂O₃), bismuth nitrate (Bi(NO₃)₃), bismuth chloride (BiCl₃), and bismuth trifluoride (BiF₃).

The bismuth salt in the electrolyte solution 554 may be present at a concentration ranging from about 0.25 grams per liter to about 10 grams per liter, based on the total volume of the electrolyte solution 554. In one alternative expression, the bismuth salt concentration ranges from about 0.25 grams per liter to about 5 grams per liter, based on the total volume of the electrolyte solution 554. In another alternative expression, the bismuth salt concentration ranges from about 0.25 grams per liter to about 2.5 grams per liter, based on the total volume of the electrolyte solution 554. In another alternative expression, the bismuth salt concentration ranges from about 0.25 grams per liter to about 1 grams per liter, based on the total volume of the electrolyte solution 554. In another alternative expression, the bismuth salt concentration ranges from about 0.3 grams per liter to about 0.8 grams per liter, based on the total volume of the electrolyte solution 554. In another alternative expression, the bismuth salt concentration ranges from about 0.4 grams per liter to about 4 grams per liter, based on the total volume of the electrolyte solution 554. In yet alternative expression, the bismuth salt concentration ranges from about 0.4 grams per liter to about 0.7 grams per liter, based on the total volume of the electrolyte solution 554.

The acid reduces the pH of the electrolyte solution 554. In one formulation, the acid in the electrolyte solution 554 is sulfuric acid (H₂SO₄). In another formulation, the acid in the electrolyte solution 554 is sulfamic acid (H₃NSO₃). In yet another formulation, the acid in the electrolyte solution 554 includes both sulfuric acid (H₂SO₄) and sulfamic acid (H₃NSO₃).

The acid in the electrolyte solution 554 may be present at a concentration ranging from about 50 milliliters per liter to about 150 milliliters per liter, based on the total volume of the electrolyte solution 554. In one alternative expression, the acid concentration ranges from about 60 milliliters per liter to about 140 milliliters per liter, based on the total volume of the electrolyte solution 554. In another alternative expression, the acid concentration ranges from about 70 milliliters per liter to about 130 milliliters per liter, based on the total volume of the electrolyte solution 554. In another alternative expression, the acid concentration ranges from about 75 milliliters per liter to about 125 milliliters per liter, based on the total volume of the electrolyte solution 554. In another alternative expression, the acid concentration ranges from about 80 milliliters per liter to about 120 milliliters per liter, based on the total volume of the electrolyte solution 554. In yet another alternative expression, the acid concentration ranges from about 90 milliliters per liter to about 110 milliliters per liter, based on the total volume of the electrolyte solution 554.

Additional components may be included in the electrolyte solution 554 without departing from the scope of the present disclosure. Various carriers and/or additives may be included in the electrolyte solution 554. As one specific, non-limiting example, the electrolyte solution 554 may include TIN MAC HT STARTER A, a proprietary surfactant, which is commercially available from MacDermid of Waterbury, Connecticut. As another specific, non-limiting example, the electrolyte solution 554 may include TIN MAC HT STARTER B, a proprietary source of methacrylic acid, which is commercially available from MacDermid of Waterbury, Connecticut. As yet another specific, non-limiting example, the electrolyte solution 554 may include TIN MAC HT REPLENISHER, a proprietary source of dipropylene glycol methyl ether and surfactant, which is commercially available from MacDermid of Waterbury, Connecticut

As one specific, non-limiting example, the electrolyte solution 554 includes water, 30 grams per liter stannous sulfate (SnSO₄), 0.58 grams per liter bismuth sulfate (Bi₂(SO₄)₃), 105 milliliters per liter sulfuric acid (H₂SO₄), 20 milliliters per liter TIN MAC HT STARTER A, 5 milliliters per liter TIN MAC HT STARTER B, and 3 milliliters per liter TIN MAC HT REPLENISHER.

The electrolyte solution 554 may be manufactured in various ways without departing from the scope of the present disclosure. In one particular implementation, the disclosed method for manufacturing the electrolyte solution 554 includes steps of (1) mixing the acid (e.g., 66 degree Baume sulfuric acid) with water (e.g., deionized water) to yield an acidic solution, (2) dissolving the stannous salt (e.g., stannous sulfate (SnSO₄)) in the acidic solution, (3) dissolving the bismuth salt (e.g., bismuth sulfate (Bi₂(SO₄)₃)) in the solution, (4) optionally adding one or more additives/carriers (e.g., TIN MAC HT STARTER A, TIN MAC HT STARTER B and/or TIN MAC HT REPLENISHER), and (5) adding additional water, if needed, to make up the required total volume of the electrolyte solution 554.

At Block 504 (Fig. 10), the substrate 556 is immersed (e.g., completely immersed) in the electrolyte solution 554. A lead 566 may electrically couple the immersed substrate 556 with a first terminal 562 of the current source 560.

At Block 506 (Fig. 10), the anode 558 is immersed (e.g., completely immersed) in the electrolyte solution 554. A lead 568 may electrically couple the immersed anode 558 with a second terminal 564 of the current source 560.

At Block 508 (Fig. 10), the current source 560 is actuated such that an electric current is passed between the substrate 556 and the anode 558. The electric current will cause a tin-bismuth alloy to deposit onto the substrate 556.

The step of passing an electric current (Block 508) may be performed at various current densities without departing from the scope of the present disclosure. Those skilled in the art will appreciate that current density is a controllable parameter, and selection of an appropriate current density may require consideration of various factors, such as the duration of the passing step (Block 508), among other factors. In one expression, the electric current passed during the passing step (Block 508) may have a current density ranging from about 10 amperes per square foot to about 80 amperes per square foot, based on the surface area of the substrate 556. In another expression, the electric current passed during the passing step (Block 508) may have a current density ranging from about 10 amperes per square foot to about 50 amperes per square foot, based on the surface area of the substrate 556. In another expression, the electric current passed during the passing step (Block 508) may have a current density ranging from about 20 amperes per square foot to about 40 amperes per square foot, based on the surface area of the substrate 556. In another expression, the electric current passed during the passing step (Block 508) may have a current density ranging from about 15 amperes per square foot to about 30 amperes per square foot, based on the surface area of the substrate 556. In yet another expression, the electric current passed during the passing step (Block 508) may have a current density of about 30 amperes per square foot, based on the surface area of the substrate 556.

The step of passing an electric current (Block 508) may be performed for various durations of time without departing from the scope of the present disclosure. Those skilled in the art will appreciate that the current duration is a controllable parameter, and selection of an appropriate duration of time may require consideration of various factors, such as the current density, among other factors. In one expression, the passing step (Block 508) may be performed for about 5 minutes to about 120 minutes. In another expression, the passing step (Block 508) may be performed for about 5 minutes to about 60 minutes. In another expression, the passing step (Block 508) may be performed for about 10 minutes to about 30 minutes. In another expression, the passing step (Block 508) may be performed for about 10 minutes to about 20 minutes. In yet another expression, the passing step (Block 508) may be performed for about 15 minutes.

At Block 510 (Fig. 10), the substrate 556 is disconnected from the current source 560 and removed from the electrolyte solution 554.

At Block 512 (Fig. 10), the substrate 556 may be rinsed with a rinsing fluid. As an example, the rinsing fluid may be water, such as deionized water.

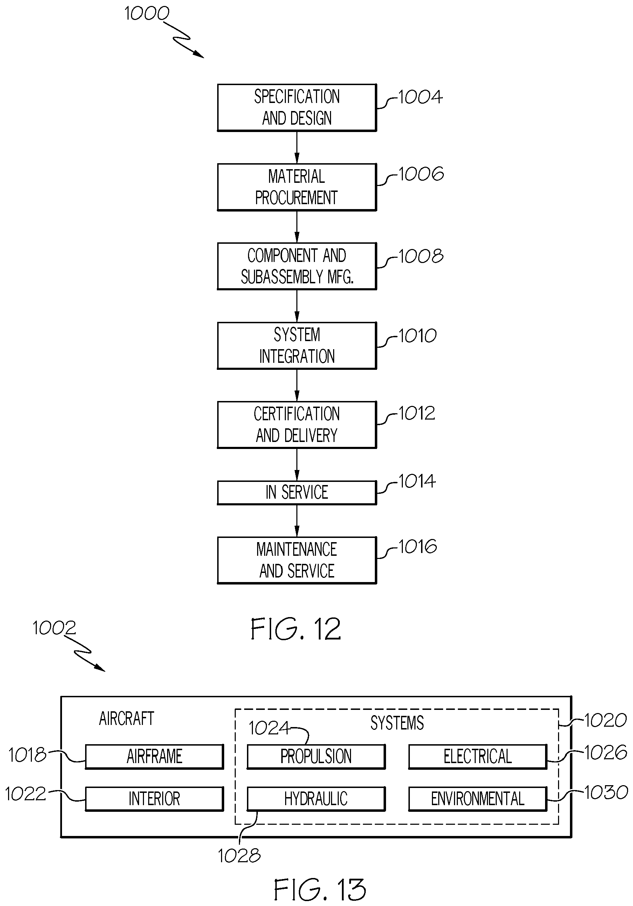

Examples of the disclosure may be described in the context of an aircraft manufacturing and service method 1000, as shown in Fig. 12, and an aircraft 1002, as shown in Fig. 13. During pre-production, the aircraft manufacturing and service method 1000 may include specification and design 1004 of the aircraft 1002 and material procurement 1006. During production, component/subassembly manufacturing 1008 and system integration 1010 of the aircraft 1002 takes place. Thereafter, the aircraft 1002 may go through certification and delivery 1012 in order to be placed in service 1014. While in service by a customer, the aircraft 1002 is scheduled for routine maintenance and service 1016, which may also include modification, reconfiguration, refurbishment and the like.

Each of the processes of method 1000 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 13, the aircraft 1002 produced by example method 1000 may include an airframe 1018 with a plurality of systems 1020 and an interior 1022. Examples of the plurality of systems 1020 may include one or more of a propulsion system 1024, an electrical system 1026, a hydraulic system 1028, and an environmental system 1030. Any number of other systems may be included.

The disclosed compositions and methods may be used during any one or more of the stages of the aircraft manufacturing and service method 1000. As one example, components or subassemblies corresponding to component/subassembly manufacturing 1008, system integration 1010, and or maintenance and service 1016 may be fabricated or manufactured using the disclosed compositions and methods. As another example, the airframe 1018 may be constructed using the disclosed compositions and methods. Also, one or more apparatus examples, method examples, or a combination thereof may be utilized during component/subassembly manufacturing 1008 and/or system integration 1010, for example, by substantially expediting assembly of or reducing the cost of an aircraft 1002, such as the airframe 1018 and/or the interior 1022. Similarly, one or more of system examples, method examples, or a combination thereof may be utilized while the aircraft 1002 is in service, for example and without limitation, to maintenance and service 1016.

Further, the disclosure comprises examples according to the following clauses:
Clause 1. An activation solution comprising: water; a fluoride salt; hydrofluoric acid; and sulfuric acid.
Clause 2. The activation solution of Clause 1 wherein the fluoride salt comprises at least one of an alkali metal cation and an alkaline earth metal cation.
Clause 3. The activation solution of Clause 1 or 2 wherein the fluoride salt comprises at least one of potassium fluoride, lithium fluoride, sodium fluoride, rubidium fluoride, barium fluoride, and strontium fluoride.
Clause 4. The activation solution of any of Clauses 1-3 wherein the fluoride salt is potassium fluoride.
Clause 5. The activation solution of any of Clauses 1-4 wherein the fluoride salt is present at a concentration ranging from about 5 grams per liter to about 120 grams per liter, based on a total volume of the activation solution.
Clause 6. The activation solution of any of Clauses 1-5 wherein the fluoride salt is present at a concentration ranging from about 10 grams per liter to about 100 grams per liter, based on a total volume of the activation solution.
Clause 7. The activation solution of any of Clauses 1-6 wherein the fluoride salt is present at a concentration of about 20 grams per liter, based on a total volume of the activation solution.
Clause 8. The activation solution of any of Clauses 1-7 wherein the hydrofluoric acid is present at a concentration ranging from about 5 milliliters per liter to about 250 milliliters per liter, based on a total volume of the activation solution.
Clause 9. The activation solution of any of Clauses 1-7 wherein the hydrofluoric acid is present at a concentration ranging from about 20 milliliters per liter to about 150 milliliters per liter, based on a total volume of the activation solution.
Clause 10. The activation solution of any of Clauses 1-9 wherein the sulfuric acid is present at a concentration ranging from about 1 percent by volume to about 45 percent by volume, based on a total volume of the activation solution.
Clause 11. The activation solution of any of Clauses 1-9 wherein the sulfuric acid is present at a concentration ranging from about 2 percent by volume to about 20 percent by volume, based on a total volume of the activation solution.
Clause 12. The activation solution of any of Clauses 1-11 maintained at atmospheric pressure and a temperature ranging from about 15 °C to about 50 °C.
Clause 13. A method for manufacturing the activation solution of Clause 1, the method comprising: mixing the sulfuric acid with at least a portion of the water to yield a first acidic solution; mixing the hydrofluoric acid with the first acidic solution to yield a second acidic solution; and dissolving the fluoride salt in the second acidic solution.
Clause 14. A method for pretreating a substrate prior to depositing a material thereon, the method comprising: immersing the substrate in the activation solution of Clause 1 for a predetermined period of time.
Clause 15. The method of Clause 14 wherein the substrate is a titanium substrate.
Clause 16. The method of Clause 14 or 15 wherein the predetermined period of time is a time between about 5 seconds and about 120 seconds.
Clause 17. The method of any of Clauses 14-16 wherein the substrate is a titanium substrate, and wherein the predetermined period of time is a time between about 20 seconds and about 40 seconds.
Clause 18. The method of any of Clauses 14-17 further comprising: removing the substrate from the activation solution after the predetermined period of time has elapsed; and after the removing, rinsing the substrate with a rinsing fluid.
Clause 19. The method of Clause 18 wherein the rinsing fluid is deionized water.
Clause 20. The method of any of Clauses 14-19 further comprising: after the immersing, subjecting the substrate to an anodic sulfuric acid process.

The disclosed compositions and methods are described in the context of an aircraft; however, one of ordinary skill in the art will readily recognize that the disclosed compositions and methods may be utilized for a variety of applications. For example, the disclosed compositions and methods may be implemented in various types of vehicles including, for example, helicopters, passenger ships, automobiles, marine products (boat, motors, etc.) and the like.

Although various aspects of the disclosed compositions and methods for activating metallic substrates have been shown and described, modifications may occur to those skilled in the art upon reading the specification. The present application includes such modifications and is limited only by the scope of the claims.

## Claims

1. An activation solution comprising:
water;
a fluoride salt;
hydrofluoric acid; and
sulfuric acid.

2. The activation solution of Claim 1 wherein the fluoride salt comprises at least one of an alkali metal cation and an alkaline earth metal cation.

3. The activation solution of Claim 1 or 2 wherein the fluoride salt comprises at least one of potassium fluoride, lithium fluoride, sodium fluoride, rubidium fluoride, barium fluoride, and strontium fluoride, wherein the fluoride salt is preferably potassium fluoride.

4. The activation solution of any of Claims 1-3 wherein the fluoride salt is present at a concentration ranging from about 5 grams per liter to about 120 grams per liter, based on a total volume of the activation solution, wherein the fluoride salt is preferably present at a concentration ranging from about 10 grams per liter to about 100 grams per liter, based on a total volume of the activation solution, or wherein the fluoride salt is preferably present at a concentration of about 20 grams per liter, based on a total volume of the activation solution.

5. The activation solution of any of Claims 1-4 wherein the hydrofluoric acid is present at a concentration ranging from about 5 milliliters per liter to about 250 milliliters per liter, based on a total volume of the activation solution, wherein the hydrofluoric acid is preferably present at a concentration ranging from about 20 milliliters per liter to about 150 milliliters per liter, based on a total volume of the activation solution.

6. The activation solution of any of Claims 1-5 wherein the sulfuric acid is present at a concentration ranging from about 1 percent by volume to about 45 percent by volume, based on a total volume of the activation solution, wherein the sulfuric acid is preferably present at a concentration ranging from about 2 percent by volume to about 20 percent by volume, based on a total volume of the activation solution.

7. The activation solution of any of Claims 1-6 maintained at atmospheric pressure and a temperature ranging from about 15 °C to about 50 °C.

8. A method for manufacturing the activation solution of Claim 1, the method comprising:
mixing the sulfuric acid with at least a portion of the water to yield a first acidic solution;
mixing the hydrofluoric acid with the first acidic solution to yield a second acidic solution; and
dissolving the fluoride salt in the second acidic solution.

9. A method for pretreating a substrate prior to depositing a material thereon, the method comprising:
immersing the substrate in the activation solution of Claim 1 for a predetermined period of time, wherein the substrate is preferably a titanium substrate.

10. The method of Claim 9 wherein the predetermined period of time is a time between about 5 seconds and about 120 seconds.

11. The method of any of Claims 9 or 10 wherein the substrate is a titanium substrate, and wherein the predetermined period of time is a time between about 20 seconds and about 40 seconds.

12. The method of any of Claims 9-11 further comprising:
removing the substrate from the activation solution after the predetermined period of time has elapsed; and
after the removing, rinsing the substrate with a rinsing fluid.

13. The method of Claim 12 wherein the rinsing fluid is deionized water.

14. The method of any of Claims 9-13 further comprising:
after the immersing, subjecting the substrate to an anodic sulfuric acid process.
